# EUROPÄISCHE PATENTSCHRIFT

(11) **EP 3 077 143 B1**
(45) Veröffentlichungstag und Bekanntmachung des Hinweises auf die Patenterteilung: **06.12.2017**
(21) Anmeldenummer: 14792747.9
(22) Anmeldetag: 30.10.2014
(51) Int. Cl.: B23C 5/10

(54) **FRÄSWERKZEUG UND UMFANGSFRÄSVERFAHREN**
MILLING TOOL AND CIRCUMFERENTIAL MILLING METHOD
OUTIL DE FRAISAGE ET PROCÉDÉ DE FRAISAGE PÉRIPHÉRIQUE

(30) Priorität: 05.12.2013 DE 102013225017
(43) Veröffentlichungstag der Anmeldung: 12.10.2016
(73) Patentinhaber: Gottfried Wilhelm Leibniz Universität Hannover, 30167 Hannover (DE)
(72) Erfinder: DENKENA, Berend, 30900 Wedemark (DE); KÖHLER, Jens, 30938 Burgwedel (DE); GRABOWSKI, Roman, 31303 Burgdorf (DE)
(74) Vertreter: Plöger, Jan Manfred
(86) Internationale Anmeldenummer: PCT/EP2014/002920
(87) Internationale Veröffentlichungsnummer: WO 2015/082029

(56) Entgegenhaltungen:
- EP-A1- 1 777 027
- DE-U1-202006 014 089
- US-A- 6 164 876

## Beschreibung

Die Erfindung betrifft ein Fräswerkzeug mit (a) einer Drehachse, um die das Fräswerkzeug im Betrieb rotiert und (b) einer Schruppschneide, die eine Schrupp-Schneidkante, eine Freifläche und eine Stützfase zwischen der Schrupp-Schneidkante und der Freifläche besitzt, wobei die Stützfase eine Stützfasenbreite hat, und wobei die Schrupp-Schneidkante einen Schrupp-Schneidkantenabstand von der Drehachse hat. Gemäß einem zweiten Aspekt betrifft die Erfindung ein Umfangsfräsverfahren.

Derartige Fräswerkzeuge werden beispielsweise zum Umfangsfräsen eingesetzt, insbesondere zur Zerspanung von Aluminium oder Aluminiumlegierungen. Bei der Hochleistungszerspanung (High Performance Cutting, HPC) werden hohe Zeitspanvolumina erreicht. Das Zeitspanvolumen wird bei der Hochleistungsbearbeitung in der Regel durch Prozessinstabilität nach oben begrenzt, die während des Bearbeitungsvorgangs auftreten. Die Ursache dafür sind selbsterregte Schwingungen, die zu einer Variation der Spannungsdicke und folglich auch der Prozesskräfte führen. Es kommt dabei zu einer Rückkopplung, was als Rattern bezeichnet wird. Es ist bekannt, dass das Rattern durch eine Freiflächenfase vermindert werden kann.

Fräswerkzeuge mit Freiflächenfase haben jedoch den Nachteil, dass höchste Oberflächengüten nur schlecht erzielt werden können. Der Grund dafür ist, dass die Stützfase die Bildung von Graten fördert, da Material seitlich abgedrängt wird. Diese Grate müssen in einem nachfolgenden Arbeitsschritt entfernt werden, was einen Teil der erhöhten Produktivität durch das Vorsehen der Stützfasen wieder auffrisst. Es ist daher für die Gestalt des Werkzeugs ein Optimum zu finden zwischen einer möglichst hohen Stabilität gegen Rattern und einer möglichst geringen Neigung zur Gratbildung.

Aus der DE 10 2004 040 580 A1 ist eine Fräse bekannt, bei der über den Umfang mehrere Schneiden vorhanden sind, deren radialer Abstand zur Fräserachse variiert. Auf diese Weise wird erreicht, die Belastung der verschiedenen Schneiden ausgewogen zu gestalten. Nachteilig an einem derartigen Fräser ist, dass diese Kontur keinen Einfluss auf die Gratbildung hat.

Aus der DE 20 2006 014 089 U1 ist ein Fräser gemäß dem Oberbegriff des Anspruchs 1 bekannt, der spiralförmige Spannuten besitzt, wobei die Drehradien der Schneiden sich voneinander unterscheiden. Auch ein derartiger Fräser hat keinen oder nur einen kleinen Einfluss auf die Gratbildung.

Aus der DE 37 42 942 C1 ist ein gattungsgemäßes Fräswerkzeug bekannt. Nachteilig an einem derartigen Werkzeug ist, dass es bei hohen Drehzahlen zu Ratterschwingen kommen kann.

Aus der US 2002/0 090 274 A1 ist ebenfalls ein gattungsgemäßer Fräser bekannt, bei dem ebenfalls bei hohen Geschwindigkeiten Ratterschwingungen nicht ausgeschlossen sind.

Die US 6,991,409 B3 beschreibt einen Umfangsfräser, bei dem in äquidistanten Winkelschritten angeordnete Schneider vorhanden sind, die jedoch unterschiedliche Helices bilden. Auf diese Weise können zwar Geräuschemissionen unterdrückt werden, die Stabilität gegen Ratterschwingungen beeinflusst dieses Design jedoch nicht.

Der Erfindung liegt die Aufgabe zugrunde, die Gratbildung insbesondere bei der Hochleistungsbearbeitung zu vermindern.

Die Erfindung löst das Problem durch ein Fräswerkzeug gemäß dem Anspruch 1, das zumindest eine Schlichtschneide, die eine Schlicht-Schneidkante und insbesondere auch eine Schlicht-Freifläche, besitzt, aufweist, wobei die Schlicht-Schneidkante einen Schlicht-Schneidkantenabstand von der Drehachse hat, der größer ist als der Schrupp-Schneidkantenabstand, und wobei die Schlicht-Schneidkante ungefast ist oder eine Schlichtfase mit einer Schlichtfasenbreite hat, die höchstens ein Drittel der Stützfasenbreite beträgt. Die Erfindung löst auch das Problem eines Umfangsfräsverfahrens mit den Merkmalen von Anspruch 9.

Es ist ein Vorteil der Erfindung, dass höchste Zeitspanvolumina ohne Rattern erzielbar sind und dennoch keine oder nur eine geringe Neigung zur Bildung von Graten auftritt.

Es ist ein weiterer Vorteil, dass das erfindungsgemäße Fräswerkzeug die genannten Vorteile bietet, ohne umfangreiche Änderungen von Prozessparameter des Bearbeitungsprozesses durchführen zu müssen. Es ist möglich, bestehende Bearbeitungsprogramme ohne sonstige Änderungen schneller ablaufen zu lassen, ohne dass eine Verschlechterung hinsichtlich der Gratbildung befürchtet werden muss. Es ist daher möglich, ein Bauteil allein durch Verwenden des neuen Fräswerkzeugs und durch Erhöhen der Abarbeitungsgeschwindigkeit des CNC-Programms schneller zu fertigen, ohne die Bauteilqualität zu senken.

Vorteilhaft ist zudem, dass gegenüber einer zweistufigen Bearbeitung mit einem ersten Schrupp-Schritt in einem zweiten Schlicht-Schritt ein Werkzeug eingespart werden kann. Das verringert die Prozesszeit und zudem den Aufwand bei der Lagerhaltung.

Der Erfindung liegt die Erkenntnis zugrunde, dass die Gratbildung durch seitlich abgedrängtes Material entsteht, wobei der Materialstrom zur Seite hin besonders groß ist, wenn die Schneidkante eine große momentane Spannungsdicke hat. Durch die Schrupp-Schneidkante wird beim Fräsen zunächst ein großer Span abgenommen. Die nachfolgende Schlichtschneide nimmt dann einen kleineren Span ab, so dass es zu weniger seitlicher Verdrängung von Material kommt und damit zu einer geringen Gratbildung. Durch den Schneidkantenversatz der Schrupp-Schneidkante erzeugt diese eine geringere Spanungsdicke. Die Gratbildung bei der Schrupp-Schneidkante ist im Wesentlichen auf den Ploughing-Effekt zurückzuführen, also eine erhöhte Kontaktzone zwischen der gefasten Freifläche und der erzeugten Oberfläche des Werkstücks.

Im Rahmen der vorliegenden Beschreibung werden die Bezeichnungen Schruppschneide und Schlichtschneide verwendet, um die unterschiedlichen zu erzielenden Abtragscharakteristiken zu beschreiben. Die Schruppschneide ist dabei definitionsgemäß diejenige Schneide, die eine Stützfase besitzt, wohingegen die Schlichtschneide diejenige Schneide ohne oder mit deutlich kleinerer Stützfase ist.

Unter dem Fräswerkzeug wird insbesondere ein Umfangsfräser verstanden. Ein Stirn-Umfangsfräser ist ein Spezialfall eines Umfangsfräsers. Entsprechend ist ein Stirn-Umfangsfräsverfahren ein Spezialfall eines Umfangsfräsverfahrens.

Das Fräswerkzeug ist beispielsweise aus Hartmetall, insbesondere aus mit einem Hartstoff beschichtetem Hartmetall aufgebaut. Es ist aber auch möglich, dass das Fräswerkzeug aus Keramik besteht.

Klassischerweise ist der Übergang zwischen der Freifläche und der Fase durch eine Kante gebildet, das ist aber nicht notwendig. Es ist beispielsweise auch möglich, dass diese Kante verrundet ist. Es ist zudem möglich, dass die Fase eine Krümmung aufweist. Maßgeblich ist, dass die Schruppschneide an ihrer dem Werkstück zuwandten Seite eine geometrische Struktur aufweist, die sicherstellt, dass eine Zunahme an Passivkraft, die entsteht, wenn die Schneide weiter in das Material hineinbewegt wird, für die Schruppschneide deutlich größer ist als für die Schlichtschneide, insbesondere zumindest um das 1,5-fache, besonders bevorzugt um zumindest das Doppelte. Alternativ oder zusätzlich weist die Schruppschneide an ihrer dem Werkstück zuwandten Seite eine geometrische Struktur auf, die so gestaltet ist, dass die Reibkraft bei der Schruppschneide zumindest das 1,5-fache der Reibkraft an der Schlichtschneide beträgt.

Günstig ist es, wenn ein Durchmesser des Fräswerkzeugs zumindest 5 Millimeter, insbesondere zumindest 10 Millimeter, beträgt.

Gemäß einer bevorzugten Ausführungsform ist der Schlicht-Schneidkantenabstand zumindest 10 Mikrometer größer ist der Schrupp-Schneidkantenabstand. In anderen Worten beträgt ein Schneidkantenversatz ΔR in Form einer Differenz zwischen dem Schrupp-Schneidkantenabstand und dem Schlicht-Schneidkantenabstand zumindest 10 Mikrometer. Günstig ist es, wenn der Schneidkantenversatz höchstens 35 Mikrometer beträgt, insbesondere höchstens 25 Mikrometer. Besonders günstig ist es, wenn der Schneidkantenversatz ΔR = 0,003*2*R - 10µm ± 5 µm beträgt. Vorzugsweise liegt der Radius R des Fräswerkzeugs in diesem Fall zwischen R = 8 Millimeter und R = 22 Millimeter.

Gemäß einer bevorzugten Ausführungsform hat das Fräswerkzeug eine Länge, die zumindest das Fünffache des Durchmessers beträgt. Lange Fräswerkzeuge neigen besonders stark zum Rattern, so dass bei derartigen schlanken Fräswerkzeugen die Erfindung einen besonders positiven Effekt hat. Derartige Fräswerkzeuge können beispielsweise zum Fräsen von Stegen eingesetzt werden.

Vorzugsweise sind die Schruppschneide und die Schlichtschneide in einer Umfangsseite des Fräswerkzeugs ausgebildet.

In einer bevorzugten Ausführungsform umfasst das Fräswerkzeug (a) eine zweite Schruppschneide, die eine Schneidkante, eine zweite Freifläche und eine zweite Stützfase zwischen der zweiten Schrupp-Schneidkante und der zweiten Freifläche besitzt, wobei die zweite Stützphase eine zweite Stützphasenbreite hat und wobei die zweite Schrupp-Schneidkante den Schrupp-Schneidkantenabstand von der Drehachse hat, und (b) eine zweite Schlichtschneide, die eine zweite Schlicht-Schneidkante und eine zweite Schlicht-Freifläche besitzt, wobei die zweite Schlicht-Schneidkante, den Schlicht-Schneidkantenabstand von der Drehachse hat und wobei die zweite Schlicht-Schneidkante ungefast ist oder eine zweite Schlichtfase mit einer zweiten Schlichtfasenbreite, die höchstens ein Drittel der zweiten Stützfasenbreite beträgt, hat, und wobei (c) ein Schrupp-Schlicht-Winkelabstand zwischen einer Schruppschneide und der in Drehrichtung des Fräswerkzeugs nachfolgenden Schlichtschneide kleiner ist als ein Schlicht-Schrupp-Winkelabstand zwischen jeder Schlichtschneide und der in Drehrichtung des Fräswerkzeugs nachfolgenden Schruppschneide.

Gemäß einer bevorzugten Ausführungsform hat das Fräswerkzeug genau zwei Schruppschneiden und genau zwei Schlichtschneiden.

Es sei betont, dass die Begriffe der ersten Freifläche und der zweiten Freifläche sich nicht - wie teilweise in der Literatur verwendet - auf aneinander angrenzende Bereiche ein und derselben Schneide beziehen, sondern nur die Freiflächen der unterschiedlichen Schneidkanten bezeichnen sollen.

Insbesondere besitzt das Fräswerkzeug in diesem Fall vier Schneiden, nämlich zwei Schruppschneiden und zwei Schlichtschneiden. Dadurch, dass der Schrupp-Schlicht-Winkelabstand kleiner ist als der Schlicht-Schrupp-Winkelabstand, wird erreicht, dass die Schlichtschneide kurz nach der Schruppschneide ins Material eingreift. Auf diese Weise wird besonders viel von dem Material abgetragen, das ansonsten einen Grat bilden könnte. Der durch die Schrupp-Schneidkante erzeugte Grat kann so durch die Schlicht-Schneidkante entfernt werden.

Besonders günstig ist es, wenn der Schrupp-Schlicht-Winkelabstand zumindest 10°, insbesondere zumindest 20°, kleiner ist als der Schlicht-Schrupp-Winkelabstand. In anderen Worten beträgt eine Winkelteilungsdifferenz zumindest 10°. Bei einem Fräswerkzeug mit zwei Schruppschneiden und zwei Schlichtschneiden ist es günstig, wenn die Winkelteilungsdifferenz höchstens 25° beträgt, insbesondere höchstens 20°.

Günstig ist es, wenn ein Stützfasenwinkel, den die Stützfase mit der Ebene bildet, in der sich die Schrupp-Schneidkante bewegt, in einem Intervall von 10° bis 25° liegt. Vorzugsweise beträgt die Stützfasenbreite zumindest 0,05 mm, insbesondere zumindest 0,30 mm. Bei einer derartigen Stützfasenbreite sind bei herkömmlichen Werkzeugen ausgeprägte Grate zu erwarten, die beim erfindungsgemäßen Werkzeug jedoch nicht auftreten.

Gemäß einer bevorzugten Ausführungsform beträgt ein Schrupp-Steigungswinkel δ der Schruppschneide zumindest 20° und/oder höchstens 50°. Vorzugsweise beträgt zudem ein Schlicht-Steigungswinkel zumindest 20° und/oder höchstens 50°. Die genannten Steigungswinkel, die auch als Helixwinkel bekannt sind, sind besonders bei Fräswerkzeugen mit genau zwei Schruppschneiden und genau zwei Schlichtschneiden günstig. Möglich ist, dass sich der Schlicht-Steigungswinkel vom Schrupp-Steigungswinkel unterscheidet.

Beim erfindungsgemäßen Verfahren wird vorzugsweise ein Werkstück gefräst, das zumindest an der Stelle, an der es bearbeitet wird, aus Aluminium oder einer Aluminium-Legierung besteht.

Die radiale Zustellung ist vorzugsweise größer als ein Millimeter gewählt. Derartige Zustellungen führen in Kombination mit hohen axialen Zustellungen zu großen Prozesskräften und damit regelmäßig zu Rattern, was durch das erfindungsgemäße Werkzeug verhindert werden kann.

Günstig ist zudem, wenn ein Zahnvorschub größer ist als 0,1 mm und/oder eine axiale Zustellung zumindest 50 mm, insbesondere zumindest 20 mm beträgt und/oder eine Spindeldrehfrequenz größer als 8000 Umdrehungen pro Minute ist. Die genannten Bearbeitungsparameter führen bei konventionellen Werkzeugen stets zu einem hohen Risiko, dass der Arbeitsprozess instabil wird. Durch das erfindungsgemäße Fräswerkzeug ist eine Bearbeitung auch bei den genannten Bearbeitungsparametern prozesssicher durchführbar.

Im Folgenden wird die Erfindung anhand der beigefügten Zeichnungen näher erläutert: Dabei zeigt
- Figur 1: ein erfindungsgemäßes Fräswerkzeug in einer Seitenansicht,
- Figur 2: einen Querschnitt durch das Fräswerkzeug gemäß Figur 1,
- Figur 3: einen Querschnitt durch eine Schruppschneide und
- Figur 4: einen Querschnitt durch eine Schlichtschneide.

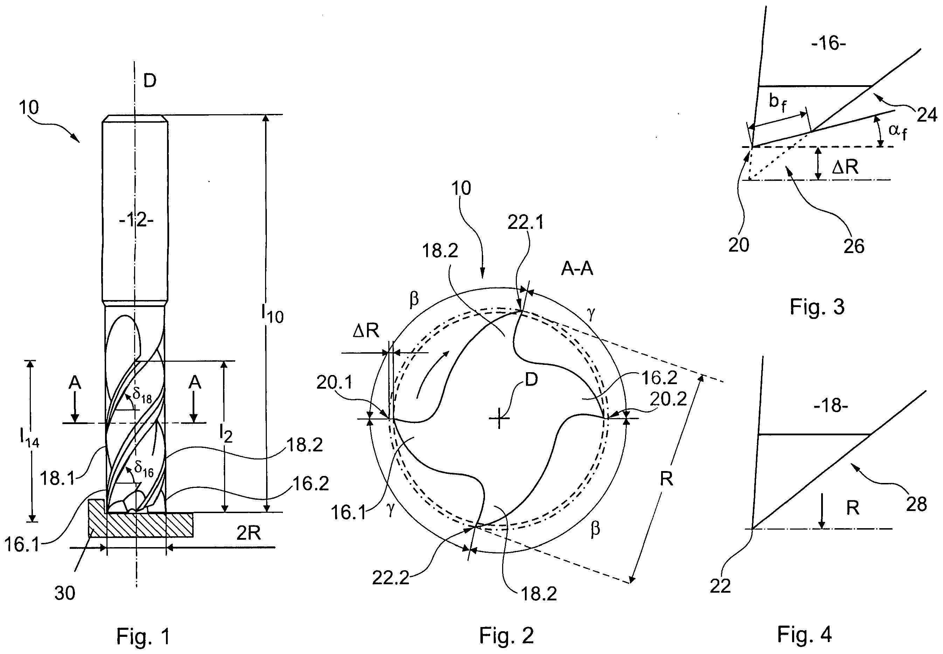

Figur 1 zeigt ein erfindungsgemäßes Fräswerkzeug 10 in Form eines Umfangsfräsers, das einen im vorliegenden Fall zylinderförmigen Schaft 12 und einen Schneidenabschnitt 14, der eine Länge I₁₄ besitzt. Eine Gesamtlänge des Fräswerkzeugs 10 ist mit I₁₀ bezeichnet.

Das Fräswerkzeug 10 besitzt eine Drehachse D sowie eine erste Schruppschneide 16.1, eine zweite Schruppschneide 16.2, eine erste Schlichtschneide 18.1 und eine zweite Schlichtschneide 18.2. Beide Schruppschneiden 16.1, 16.2 sind gegenüberliegend angeordnet (siehe auch Figur 2). Auch die beiden Schlichtschneiden 18.1, 18.2 sind ebenfalls gegenüberliegend angeordnet.

Das Fräswerkzeug 10 hat einen Radius R, der dem Durchmesser eines Hüllzylinders entspricht. Der Hüllzylinder ist der gedachte Zylinder minimalen Durchmessers, der den Schneidenabschnitt 14 umgibt. Wird das Fräswerkzeug 10 zum Einstechen verwendet, entsteht ein Loch mit dem Radius R. Der Radius R des Fräswerkzeugs 10 beträgt im vorliegenden Fall 5 mm.

Figur 1 zeigt zudem einen Schlicht-Steigungswinkel δ₁₈, der im vorliegenden Fall so groß ist wie ein Schrupp-Steigungswinkel δ₁₆.

Figur 2 zeigt den Querschnitt A-A aus Figur 1. Es ist zu erkennen, dass die Schruppschneide 16.1 eine Schrupp-Schneidkante 20.1 besitzt. Die zweite Schruppschneide 16.2 ist gleich aufgebaut und besitzt eine zweite Schrupp-Schneidkante 20.2. Dreht sich das Fräswerkzeug 10, so bewegen sich die Schrupp-Schneidkanten 20 (Bezugszeichen ohne Zählsuffixbeziehen sich auf jeweils alle entsprechenden Objekte) auf einem Kreis mit einem Radius R-ΔR. ΔR wird als Schneidkantenversatz bezeichnet. Der Schneidkantenversatz beträgt im Ausführungsbeispiel ΔR = 40 µm.

Die Schlichtschneide 18.1 besitzt eine Schlicht-Schneidkante 22.1, die gleich aufgebaute Schlichtschneide 18.2 entsprechend eine Schlicht-Schneidkante 22.2. Dreht sich das Fräswerkzeug 10 um die Drehachse D, so bewegen sich die Schlicht-Schneidkanten 22 auf einem Kreis mit dem Radius R.

Figur 2 zeigt, dass zwischen einer Schrupp-Schneidkante 20, beispielsweise der Schrupp-Schneidkante 20.1 und der nachfolgenden Schlicht-Schneidkante 22, im vorliegenden Fall also der Schlicht-Schneidkante 22.2, ein Schrupp-Schlicht-Winkelabstand γ besteht. Zwischen einer Schlicht-Schneidkante 22 und der nachfolgenden Schrupp-Schneidkante 20 besteht ein Schlicht-Schrupp-Winkelabstand β. Im folgenden Fall gilt γ = 80° und β = 100°. Ein Versatzwinkel τ = β - γ ist vorzugsweise zumindest 10°, insbesondere zumindest 15°.

Figur 3 zeigt einen Querschnitt durch eine Schruppschneide 16, die eine Freifläche 24 und eine Stützfase 26 besitzt. Die Stützfase 26 hat eine Stützfasenbreite b_{f} von im vorliegenden Fall b_{f} = 100 µm. Ein Fasenwinkel α_{f} beträgt im vorliegenden Fall 1°.

Figur 4 zeigt eine Schlichtschneide 18, die eine Freifläche 28 besitzt. Die Schlichtschneide 18 ist ungefast.

Dadurch, dass der Winkelversatz τ größer ist als 0°, wird erreicht, dass die Schnittkräfte an den Schlichtschneiden 18 gesenkt werden, was den Verschleiß der Schlichtschneiden 18 verringert. Zudem wird die Eingriffsdauer erhöht, in der sich sowohl eine Schruppschneide 16 als auch eine Schlichtschneide 18 im Eingriff befindet, so dass die dämpfende Wirkung der Stützfase 26 an der Schruppschneide 16 auch den Schnitt mit der Schlichtschneide 18 stabilisiert.

Ein erfindungsgemäßes Umfangsfräsverfahren wird vorzugsweise an einem Werkstück 30 aus Aluminium oder einer Aluminiumlegierung durchgeführt. Insbesondere handelt es sich um ein Umfangsfräsverfahren, bei dem ein Flugzeug-Spant oder ein sonstiges Strukturbauteil eines Flugzeugs gefräst wird. Bei derartigen Bauteilen ist das Verhältnis zwischen Endgewicht des Bauteils und Ausgangsgewicht des zur Herstellung verwendeten Rohlings besonders klein, so dass viel Material abgespant werden muss. Zudem sind die Anforderungen an die Maßhaltigkeit bei solchen Bauteilen hoch, so dass die mit dem erfindungsgemäßen Fräswerkzeug erreichbare hohe Zerspanleistung bei gleichzeitig hoher Oberflächengüte vorteilhaft ist.

Um eine hohe Zerspanleistung zu erreichen, ist eine radiale Zustellung aₑ vorzugsweise größer als 1 mm und/oder eine axiale Zustellung aₚ größer als 15 mm. Die Definition der angegebenen Größen findet sich beispielsweise in Tönshoff, Spanen, Springer-Verlag 1995.

### Bezugszeichenliste

- 10: Fräswerkzeug
- 12: Schaft
- 14: Schneidenabschnitt
- 16: Schruppschneide
- 18: Schlichtschneide

- 20: Schrupp-Schneidkante
- 22: Schlicht-Schneidkante
- 24: Freifläche
- 26: Stützfase
- 28: Freifläche
- 30: Werkstück

- D: Drehachse
- R: Radius
- ΔR: Schneidkantenversatz

- β: Schlicht-Schrupp-Winkelabstand
- γ: Schrupp-Schlicht-Winkelabstand
- δ: Steigungswinkel
- τ: Winkelversatz
- b_{f}: Stützfasenbreite
- α_{F}: Fasenwinkel

## Patentansprüche

1. Fräswerkzeug (10) mit
(a) einer Drehachse (D), um die das Fräswerkzeug (10) im Betrieb rotiert,
(b) zumindest einer Schruppschneide (16), die
- eine Schrupp-Schneidkante (20),
- eine Freifläche (24) und
- eine Stützfase (26) zwischen der Schrupp-Schneidkante (20) und der Freifläche (24) besitzt,
- wobei die Stützfase (26) eine Stützfasenbreite (bf) hat und
- wobei die Schrupp-Schneidkante (20) einen Schrupp-Schneidkantenabstand von der Drehachse (D) hat, und
(c) zumindest einer Schlichtschneide (18),
- die eine Schlicht-Schneidkante (22) besitzt,
- wobei die Schlicht-Schneidkante (22) einen Schlicht-Schneidkantenabstand von der Drehachse (D) hat, der größer ist als der Schrupp-Schneidkantenabstand,
**dadurch gekennzeichnet, dass**
(d) die Schlicht-Schneidkante (22)
ungefast ist oder
eine Schlichtfase mit einer Schlichtfasenbreite hat, die höchstens ein Drittel der Stützfasenbreite (bf) beträgt.

2. Fräswerkzeug (10) nach Anspruch 1, **dadurch gekennzeichnet, dass** ein Schneidkantenversatz (ΔR) in Form einer Differenz zwischen dem Schrupp-Schneidkantenabstand und dem Schlicht-Schneidkantenabstand kleiner ist als 50 Mikrometer und/oder größer als 10 Mikrometer.

3. Fräswerkzeug (10) nach einem der vorstehenden Ansprüche, **gekennzeichnet durch**
(a) eine zweite Schruppschneide, die
- eine zweite Schrupp-Schneidkante,
- eine zweite Freifläche und
- eine zweite Stützfase zwischen der zweiten Schrupp-Schneidkante und der zweiten Freifläche besitzt,
- wobei die zweite Stützfase eine zweite Stützfasenbreite (bf) hat und
- wobei die zweite Schrupp-Schneidkante den Schrupp-Schneidkantenabstand von der Drehachse (D) hat, und
(b) eine zweite Schlichtschneide,
- die eine zweite Schlicht-Schneidkante besitzt,
- wobei die zweite Schlicht-Schneidkante den Schlicht-Schneidkantenabstand von der Drehachse (D) hat, und
- wobei die zweite Schlicht-Schneidkante
ungefast ist oder
eine zweite Schlichtfase mit einer zweiten Schlichtfasenbreite hat, die höchstens ein Drittel der zweiten Stützfasenbreite (bf) beträgt,
(c) wobei ein Schrupp-Schlicht-Winkelabstand (γ) zwischen jeder Schruppschneide (16) und der in Drehrichtung des Fräswerkzeugs nachfolgenden Schlichtschneide (18) kleiner ist als ein Schlicht-Schrupp-Winkelabstand (β) zwischen jeder Schlichtschneide (18) und der in Drehrichtung des Fräswerkzeugs nachfolgenden Schruppschneide (16).

4. Fräswerkzeug (10) nach einem der vorstehenden Ansprüche, **dadurch gekennzeichnet, dass** der Schrupp-Schlicht-Winkelabstand (γ) zumindest 10°, insbesondere zumindest 20°, kleiner ist als der Schlicht-Schrupp-Winkelabstand (β).

5. Fräswerkzeug (10) nach einem der vorstehenden Ansprüche, **dadurch gekennzeichnet, dass** ein Stützfasenwinkel (α_{f}) in einem Intervall von 0° bis 3°, insbesondere 0° bis 2° liegt.

6. Fräswerkzeug (10) nach einem der vorstehenden Ansprüche, **dadurch gekennzeichnet, dass** die Stützfasenbreite (bf) zumindest 50 Mikrometer, insbesondere zumindest 300 Mikrometer, beträgt.

7. Fräswerkzeug (10) nach einem der vorstehenden Ansprüche, **dadurch gekennzeichnet, dass** eine Schneidenlänge der Schruppschneide (16) zumindest 10 Millimeter, insbesondere zumindest 20 Millimeter, beträgt.

8. Fräswerkzeug (10) nach einem der vorstehenden Ansprüche, **dadurch gekennzeichnet, dass** ein Steigungswinkel (δ₁₆) der Schruppschneide (16) zumindest 20° beträgt und/oder höchstens 50° beträgt.

9. Umfangsfräsverfahren, bei dem ein Fräswerkzeug (10) nach einem der vorstehenden Ansprüche eingesetzt wird.

10. Umfangsfräsverfahren nach Anspruch 9, **dadurch gekennzeichnet, dass** eine radiale Zustellung (aₑ) größer ist als 1 Millimeter.

## Claims

1. Milling tool (10) with
(a) a rotational axis (D) about which the milling tool (10) rotates during operation,
(b) at least one roughing edge (16) which has
- a roughing-cutting edge (20),
- a free surface (24) and
- a support chamfer (26) between the roughing-cutting edge (20) and the free surface (24),
- wherein the support chamfer (26) has a support chamfer width (bf) and
- wherein the roughing-cutting edge (20) is at a roughing-cutting edge distance from the rotational axis (D), and
(c) at least one smoothing edge (18)
- that comprises a smoothing-cutting edge (22),
- wherein the smoothing-cutting edge (22) is at a smoothing-cutting edge distance from the rotational axis (D) that is greater than the roughing-cutting edge distance,
**characterised by** the fact that
(d) the smoothing-cutting edge (22)
is not chamfered or
has a smoothing chamfer with a smoothing chamfer width that is a maximum of a third of the support chamfer width (b_{f}).

2. Milling tool (10) according to claim 1, **characterised by** the fact that a cutting edge offset (ΔR) in the form of a difference between the roughing-cutting edge distance and the smoothing-cutting edge distance is smaller than 50 micrometres and/or greater than 10 micrometres.

3. Milling tool (10) according to one of the above claims, **characterised by**
(a) a second roughing edge that comprises
- a second roughing-cutting edge,
- a second free surface and
- a second support chamfer between the second roughing-cutting edge and the second free surface,
- wherein the second support chamfer has a second support chamfer width (bf) and
- wherein the second roughing-cutting edge is at the roughing-cutting edge distance from the rotational axis (D), and
(b) a second smoothing edge
- that has a second smoothing-cutting edge,
- wherein the second smoothing-cutting edge is at the smoothing-cutting edge distance from the rotational axis (D), and
- wherein the second smoothing-cutting edge
is not chamfered or
has a second smoothing chamfer with a second smoothing chamfer width that is a maximum of a third of the second support chamfer width (b_{f}),
(c) wherein a roughing-smoothing angular distance (γ) between each roughing edge (16) and the subsequent smoothing edge (18) in the direction of rotation of the milling tool is smaller than a smoothing-roughing angular distance (β) between each smoothing edge (18) and the subsequent roughing edge (16) in the direction of rotation of the milling tool.

4. Milling tool (10) according to one of the above claims, **characterised by** the fact that roughing-smoothing angular distance (γ) is at least 10°, in particular at least 20°, smaller than the smoothing-roughing angular distance (β).

5. Milling tool (10) according to one of the above claims, **characterised by** the fact that a support chamfer angle (α_{f}) lies in an interval of 0° to 3°, in particular 0° to 2°.

6. Milling tool (10) according to one of the above claims, **characterised by** the fact that the support chamfer angle (bf) is at least 50 micrometres, in particular at least 300 micrometres.

7. Milling tool (10) according to one of the above claims, **characterised by** the fact that a cutting edge length of the roughing edge (16) is at least 10 millimetres, in particular at least 20 millimetres.

8. Milling tool (10) according to one of the above claims, **characterised by** the fact that a pitch angle (δ₁₆) of the roughing edge (16) is at least 20° and at most 50°.

9. Circumferential milling method in which a milling tool (10) according to one of the above claims is used.

10. Circumferential milling method according to claim 9, **characterised by** the fact that a radial feed (aₑ) is greater than 1 millimetre.

## Revendications

1. Outil de fraisage (10) comportant
(a) un axe de rotation (D) autour duquel l'outil de fraisage (10) tourne pendant le fonctionnement,
(b) au moins un tranchant d'ébauchage (16) qui comprend
- une arête de tranchant d'ébauchage (20),
- une surface libre (24) et
- un chanfrein d'appui (26) entre l'arête de tranchant d'ébauchage (20) et la surface libre (24),
- dans lequel le chanfrein d'appui (26) présente une largeur (bf) et
- dans lequel l'arête de tranchant d'ébauchage (20) présente une distance de l'axe de rotation (D), et
(c) au moins un tranchant de finition (18),
- qui possède une arête de tranchant de finition (22),
- dans lequel l'arête de tranchant de finition (22) présente une distance de l'axe de rotation (D) qui est supérieure à la distance de l'arête de tranchant d'ébauchage,
**caractérisé en ce que**
(d) l'arête de tranchant de finition (22)
est dépourvue de chanfrein ou
présente un chanfrein de finition avec une largeur qui s'élève au maximum à un tiers de la largeur (bf) du chanfrein d'appui.

2. Outil de fraisage (10) selon la revendication 1, **caractérisé en ce qu'**un décalage de l'arête de tranchant (ΔR) sous la forme d'une différence entre la distance de l'arête de tranchant d'ébauchage et la distance de l'arête de tranchant de finition est inférieur à 50 micromètres et/ou supérieur à 10 micromètres.

3. Outil de fraisage (10) selon l'une des revendications précédentes, **caractérisé par**
(a) un second tranchant d'ébauchage qui comprend
- une seconde arête de tranchant d'ébauchage,
- une seconde surface libre et
- un second chanfrein d'appui entre la seconde arête de tranchant d'ébauchage et la seconde surface libre,
dans lequel
- le second chanfrein d'appui présente une seconde largeur (b_{f}) et
- la seconde arête de tranchant d'ébauchage présente la distance de l'arête de tranchant par rapport à l'axe de rotation (D), et
(b) un second tranchant de finition
- qui possède une seconde arête de tranchant de finition,
- dans lequel la seconde arête de tranchant de finition présente la distance de l'arête de tranchant par rapport à l'axe de rotation (D),
- dans lequel la seconde arête de tranchant de finition
est dépourvue de chanfrein ou
présente un second chanfrein de finition avec une seconde largeur qui s'élève au maximum à un tiers de la largeur (b_{f}) du second chanfrein d'appui,
(c) dans lequel une distance angulaire (γ) d'ébauchage/finition entre chaque tranchant d'ébauchage (16) et le tranchant de finition (18) suivant en direction de rotation de l'outil de fraisage est inférieure à une distance angulaire (β) de finition/d'ébauchage entre chaque tranchant de finition (18) et le tranchant d'ébauchage (16) suivant en direction de rotation de l'outil de fraisage.

4. Outil de fraisage (10) selon l'une des revendications précédentes, **caractérisé en ce que** la distance angulaire (γ) d'ébauchage/finition est inférieure d'au moins 10°, en particulier d'au moins 20°, à la distance angulaire (β) de finition/d'ébauchage.

5. Outil de fraisage (10) selon l'une des revendications précédentes, **caractérisé en ce qu'**un angle (α_{f}) du chanfrein d'appui se trouve dans un intervalle de 0° à 3°, en particulier de 0° à 2°.

6. Outil de fraisage (10) selon l'une des revendications précédentes, **caractérisé en ce que** la largeur (b_{f}) du chanfrein d'appui est d'au moins 50 micromètres, en particulier d'au moins 300 micromètres.

7. Outil de fraisage (10) selon l'une des revendications précédentes, **caractérisé en ce qu'**une longueur du tranchant d'ébauchage (16) s'élève à au moins 10 millimètres, en particulier à au moins 20 millimètres.

8. Outil de fraisage (10) selon l'une des revendications précédentes, **caractérisé en ce qu'**un angle (δ₁₆) du tranchant d'ébauchage (16) s'élève à au moins 20° et/ou au maximum à 50°.

9. Procédé de fraisage périphérique dans lequel on utilise un outil de fraisage (10) selon l'une des revendications précédentes.

10. Procédé de fraisage selon la revendication 9, **caractérisé en ce qu'**une profondeur de passe radiale (aₑ) est supérieure à 1 millimètre.
